# EUROPEAN PATENT APPLICATION

(11) **EP 1 300 258 A1**
(43) Date of publication of application: **09.04.2003**
(21) Application number: 02700592.5
(22) Date of filing: 18.02.2002
(51) Int. Cl.: B42D 15/10

(54) **CARD TRUE/FALSE DECISION APPARATUS**

(30) Priority: 27.03.2001 JP 2001089615; 13.06.2001 JP 2001177973
(71) Applicant: Kabushiki Kaisha TOPCON, Tokyo 174-0052 (JP)
(72) Inventor: HORI, Nobuo c/o Kabushiki Kaisha TOPCON, Itabashi-ku, Tokyo 174-0052 (JP); NAGANO, Shigenori c/o Kabushiki Kaisha TOPCON, Itabashi-ku, Tokyo 174-0052 (JP); SOTOYAMA, Hiroyuki c/o Kabushiki Kaisha TOPCON, Itabashi-ku, Tokyo 174-0052 (JP)
(74) Representative: Pfenning, Meinig & Partner
(86) International application number: JP0201345
(87) International publication number: WO02076760

(57) **Abstract**

An apparatus for discriminating authenticity of a card 1 having a predetermined hologram corresponding to a kind of the card 1 to discriminate the authenticity of the card 1 based on the hologram, comprises: a measuring light projecting system (semiconductor laser 25a, collimating lens 25b) to project a measuring beam P onto the hologram; an area sensor 28 to receive reflected diffraction light of the measuring beam P reflected by the hologram; a plurality of discriminating calculation means 30 ∼ 32 to perform the authenticity discrimination for card 1 by achieving calculations corresponding to respective kind of the holograms based on output signals from the area sensor 28; and a selecting mean (selecting switch 24, switch circuit 29) to select any one of the plurality of discriminating calculation means 30 ∼ 32.

## Description

### Field of the Invention

The present invention relates to an apparatus for discriminating authenticity of a card having a hologram on which an image based on gird patterns is formed.

### Description of the Related Art

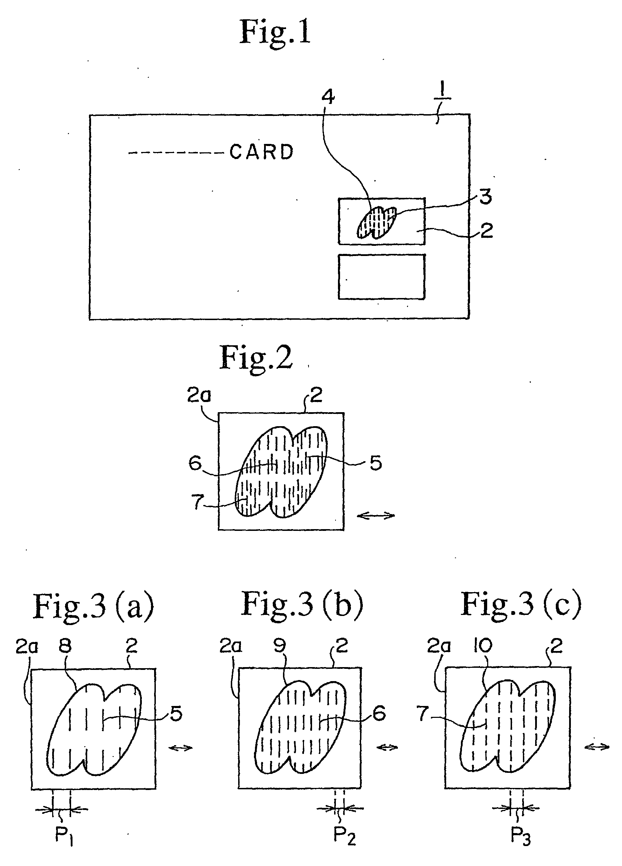

Up to now, as shown in Fig. 1, there is known a card 1 such as a credit card, for example, on which a hologram seal 2 is provided. The hologram seal 2 is formed with an image 4 based on grid patterns 3. The hologram seal 2 is used to discriminate authenticity of the card 1.

In the past, the authenticity of the card has been discriminated by naked eye, however, it is objectively difficult to discriminate the authenticity of the card 1 because the image 4 may be varied in response to a direction of incident light onto the card or there may be scratch on the card.

Recently, to objectively discriminate the authenticity of the card 1, there is being developed an apparatus for discriminating authenticity of card in which a parallel beam as a measuring beam is projected onto the hologram seal 2, a reflected diffraction light based on the measuring beam reflected on the hologram seal 2 is received by a light receiving element and then the authenticity of the card is discriminated on the basis of a peak strength of light intensity distribution of the reflected diffraction light, a position of center of mass the distribution, a width of its spread, number of peaks and so on (for example, see Japanese Patent Application No. 2000-118067).

By the way, in the card 1 there are ones of forming a plurality of images by varying an arrangement-forming direction of diffraction gratings of consisting grid patterns 3 in order to prevent a counterfeiting.

Fig. 2 shows a rectangular shaped hologram seal 2 on which three kind of images are formed based on three grid patterns 5 - 7 composed of diffraction gratings, for example, with different pitches, and Fig. 3 (a) shows an image 8 based on the grid pattern 5 having diffraction gratings which are formed along a direction perpendicular to one side 2a of the rectangular shaped hologram seal 2 and which have a pitch P1, Fig. 3 (b) shows an image 9 based on the grid pattern 6 that is composed of diffraction gratings whose arrangement-forming direction is the same direction as that of the grid pattern 5 and having a pitch P2 which is narrower than pitch P1, and Fig. 3 (c) shows an image 10 based on the grid pattern 7 that is composed of diffraction gratings whose arrangement-forming direction is the same direction as that of the grid patterns 5, 6 and having a pitch P3 which is narrower than the pitch P1 but wider than the pitch P2, and then these three images 8 - 10 are superimposed to form the hologram seal 2 as shown in Fig. 2. How these images 8 - 10 appear is varied depending upon an incident beam onto the hologram seal 2. Arrows shown in Fig. 2 and Fig. 3 designate the arrangement-forming directions of diffraction gratings and the direction in which the respective diffraction gratings are extending are perpendicular to the arrangement-forming direction.

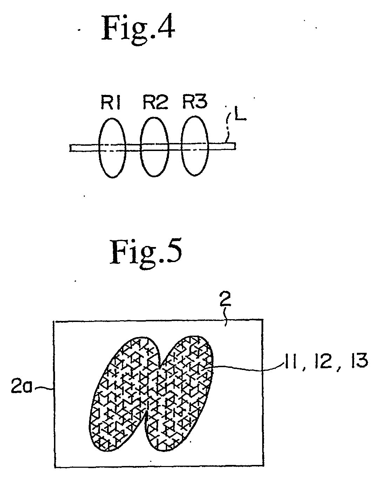

When a parallel beam is projected onto this kind of hologram seal 2, reflected diffraction lights R1, R2 and R3 as shown in Fig. 4 are generated based on the parallel beam. In the drawing, reference symbol L designates a line sensor (for example, see Japanese Patent Application No. 2000-154708).

Here, the reflected diffraction light R1 depends on, for example, the grid pattern 5, the reflected diffraction light R2 depends on, for example, the grid pattern 6 and the reflected diffraction light R3 depends on, for example, the grid pattern 7.

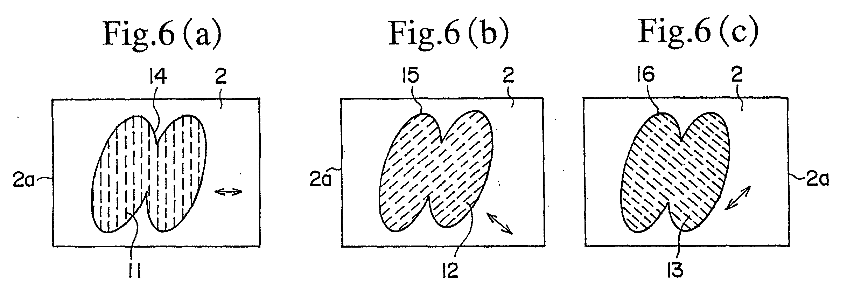

Further, Fig. 5 shows a hologram seal 2 on which three kind of images are formed based on three grid patterns 11 - 13 and Fig. 6 (a) shows an image 14 based on a grid pattern 11 composed of diffraction gratings which are formed along a direction perpendicular to one side 2a of the rectangular shaped hologram seal 2, Fig. 6 (b) shows an image 15 based on a grid pattern 12 composed of diffraction gratings which are formed along a direction of right oblique of 45 degree with respect to the arrangement forming-direction of diffraction gratings of the grid pattern 12, Fig. 6 (c) shows an image 16 based on a grid pattern 13 composed of diffraction gratings which are formed along a direction of left oblique of 45 degree with respect to the arrangement-forming direction of diffraction gratings of the grid pattern 11, then these three images 14 - 16 are superimposed to form the hologram seal 2 as shown in Fig. 5.

How these images 14 - 16 appear is varied depending upon an incident beam onto the hologram seal 2. Arrows shown in Fig. 6 designate the arrangement-forming directions of diffraction gratings and the directions in which the respective diffraction gratings are extending are perpendicular to the arrangement-forming direction.

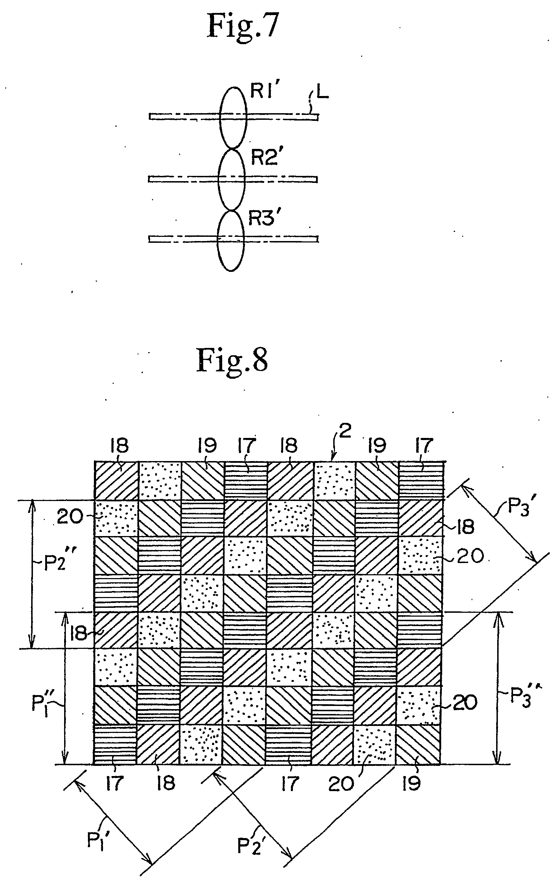

When a parallel beam is projected onto this kind of hologram seal 2, reflected diffraction lights R1', R2' and R3' as shown in Fig. 7 are generated based on the parallel beam.

Here, the reflected diffraction light R1' depends on, for example, the grid pattern 14, the reflected diffraction light R2' depends on, for example, the grid pattern 15 and the reflected diffraction light R3' depends on, for example, the grid pattern 16.

Moreover there is the other hologram seal 2 in which three grid patterns 17 - 19 are periodically arranged with diffraction gratings having predetermined pitches and having directions in which the diffraction gratings extend directions are different in every 45 degree approximately as shown in Fig. 8. An extending direction of diffraction gratings in the grid pattern 17 is slanting approximately 45 degree with respect to the extending directions of the diffraction gratings in the grid patterns 18 and 19, and the extending directions of the diffraction gratings in the grid patterns 18 and 19 are slanting approximately 90 degree to each other. These rectangular shaped grid patterns have a micro structure having a side width of, for example, about 20 micro meter.

That is to say, in the hologram seal 2 of this kind the grid pattern themselves are arranged in a long periodic structure in addition to a short periodic structure of the diffraction gratings in the grid patterns are composed, reference symbols P1', P2', P3' designate pitches of a first long periodic structure of the respective grid patterns 17 - 19, and reference symbols P1", P2", P3" designate pitches of a second long periodic structure of the respective grid patterns 17 - 19.

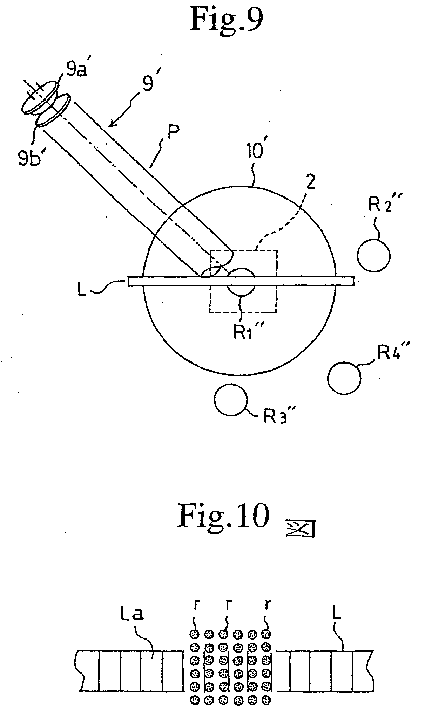

When a measuring beam P as a parallel beam is projected on the hologram seal 2 of this kind from a measuring-light projecting system 9' as shown in Fig. 9, three reflected diffraction lights R1", R2", R3" are generated by three kind of the respective diffraction gratings composing the respective grid patterns 17 - 19. In the drawing, reference symbol R4" designates a mirror reflection light generated by a pattern 20.

At this point, the reflected diffraction light R1" depends on, for example, the grid pattern 17, the reflected diffraction light R2" depends on, for example, the grid pattern 18 and the reflected diffraction light R3" depends on, for example, the grid pattern 19.

The respective reflected diffraction lights R1", R2" and R3" are detected by a line sensor L as a light receiving element through a Fourier transformation lens 10', and by obtaining presence or absence of light intensity distribution, a peak strength of the light intensity distribution and width of its spread of the respective reflected diffraction lights R1", R2" and R3" on the basis of an output of the received light on the respective elements La of the line sensor L by a calculating means which is not shown in the drawings, the discrimination of authenticity of the card can be performed.

Note that reference numeral 9a' in Fig. 9 denotes a semiconductor laser, reference numeral 9b' denotes a collimating lens by which a divergent beam projected from the semiconductor laser 9a' is transformed into a parallel beam.

Further in the hologram seal 2 having grid patterns 17 - 19 of this kind, because the respective grid patterns 17 - 19 have the long periodic structure and the short periodic structure, the respective grid patterns 17 - 19 for themselves function as the respective diffraction gratings to generate refined reflected diffraction light in the reflected diffraction light and the respective reflected diffraction light R1" - R3" are composed with diffraction lights r like a great number of small scattered spots, such as shown in Fig. 10.

As described above, there are a many kind of hologram seals 2 depending upon the kind of card, the reflected diffraction light is formed along a different direction and in a different manner depending upon the kind of card when a measuring beam is projected on the hologram seal 2.

Accordingly, there is demanded an apparatus for discriminating authenticity of card by which a plurality kind of cards can be discriminated by only one apparatus, in other words, an apparatus for discriminating authenticity of card by which can achieve an appropriate discrimination without being affected by difference of hologram seal.

In a card 1 which has the long periodic structure and the short periodic structure, because the light receiving signals of respective element La in the line sensor L extremely varies on the basis of slight misalignment in position of diffraction lights r like a great number of the spots, a peak and a width of the peak of the light intensity distribution of the entire reflected diffraction lights can not be detected in averaged form and thereby the authenticity of card can not be objectively discriminated.

The present invention has been made in consideration of the above described problem and it is a first object of the present invention to provide an apparatus for discriminating authenticity of a card which can be applied to a plurality kind of cards by one apparatus.

It is a second object of the present invention to provide an apparatus for discriminating authenticity of card by which the authenticity can be objectively discriminated even for a card having a hologram seal in that grid patterns with a short periodic structure and a long periodic structure are arranged in a predetermined period.

### Disclosure of the Invention

An apparatus for discriminating authenticity of a card as recited in claim 1 according to the present invention is characterized by that the apparatus for discriminating authenticity of the card on which a predetermined hologram seal corresponding to a kind of the card is formed, based on the hologram seal and including: a measuring light projecting system to project a measuring beam onto the hologram seal; an area sensor to receive reflected diffraction light generated by the measuring beam which is reflected on the hologram seal; a plurality of discriminating calculation means to discriminate the authenticity of the card by respectively performing a calculation in accordance with a kind of the hologram seal based on a signal output from the area sensor; and a selecting means to select any one of the plurality of discriminating calculation means.

An apparatus for discriminating authenticity of a card as recited in claim 2 in accordance with the present invention is characterized by that a plurality kind of grid patterns having diffraction gratings whose arrangement forming direction are different to each other, are arranged in a predetermined period on the hologram seal in order that the reflected diffraction lights are composed with diffraction lights like a many number of small scattered spots generated by the diffraction gratings, and at the same time a mirror reflection pattern is arranged in a predetermined period, and characterized by that at least one of discriminating calculation means discriminating the authenticity of the card having the hologram seal in which a mirror reflection pattern and grid patterns with the short periodic structure and a long periodic structure are formed, in the apparatus in claim 1.

An apparatus for discriminating authenticity of a card as recited in claim 3 in accordance with the present invention is characterized by the discriminating calculation means performs the authenticity discrimination with reference to the mirror reflection light generated by the mirror reflection pattern in the apparatus for discriminating the authenticity of the card, in the apparatus in claim 2.

An apparatus for discriminating authenticity of a card as recited in claim 4 in accordance with the present invention is characterized by including: a measuring light projecting system which converges and projects a measuring beam from a predetermined direction onto a hologram seal formed on the card in which a plurality of kind of grid patterns having diffraction gratings whose arrangement forming directions are different to each other, are arranged in a predetermined period; a light receiving element to receive reflected diffraction light generated by the measuring beam which is reflected and diffracted by the hologram seal; and a discriminating calculation means to perform an authenticity discrimination of the card based on a received light signal of the light receiving element.

An apparatus for discriminating authenticity of a card as recited in claim 5 in accordance with the present invention is characterized by that the apparatus for discriminating the authenticity of the card which has a hologram seal with a plurality of grid patterns having diffraction gratings whose arrangement forming direction are different each other, are arranged in a predetermined period on the hologram seal in order that the reflected diffraction lights are composed with diffraction lights like a many number of small scattered spots generated by the diffraction gratings, and at the same time a mirror reflection pattern is arranged in a predetermined period, and including: a measuring light projecting system which converges and projects a measuring beam from a predetermined direction onto the hologram seal; a light receiving element to receive reflected diffraction light of the measuring beam which is reflected and diffracted by the hologram seal; and a discriminating calculation means to perform an authenticity discrimination of the card based on a received light signal of the light receiving element.

An apparatus for discriminating authenticity of a card as recited in claim 6 in accordance with the present invention is characterized by that total occupying area of the grid pattern existing in a projected area of the measuring beam is larger than an area defined by a grid pattern with a longest period and smaller than two or three times more of the defined area, in the apparatus in claim 4 or 5.

An apparatus for discriminating authenticity of a card as recited in claim 7 in accordance with the present invention is characterized by that a mirror reflection pattern is formed with a predetermined period on the hologram seal, in the apparatus in claim 5.

### Brief Description of the Drawings

Fig. 1 is a diagram showing one example of a card on which a conventional hologram seal is attached.
Fig. 2 is a diagram showing one example of the hologram seal of the card shown in Fig. 1.
Fig. 3 is a diagram showing one example of a grid pattern of the hologram seal shown in Fig. 2.
Fig. 4 is a diagram showing a reflected diffraction light generated by the grid pattern shown in Fig. 3.
Fig. 5 is a diagram showing another example of the hologram seal.
Fig. 6 is a diagram showing the grid pattern of the hologram seal shown in Fig. 5.
Fig. 7 is a diagram showing a reflected diffraction light generated by the grid pattern shown in Fig. 6.
Fig. 8 is a diagram showing still other example of the hologram seal.
Fig. 9 is a diagram showing a reflected diffraction light generated by the grid pattern of the hologram seal shown in Fig. 8.
Fig. 10 is a diagram showing a spot shaped diffraction light generated by the grid pattern of the hologram seal shown in Fig. 8.
Fig. 11 is a diagram showing an appearance of an apparatus for discriminating authenticity in accordance with a first embodiment of the present invention.
Fig. 12 is a block diagram showing a relevant part of circuit for the apparatus for discriminating authenticity of card shown in Fig. 11.
Fig. 13 is a diagram showing a relevant part of optical system for the apparatus for discriminating authenticity of card shown in Fig. 11.
Fig. 14 is an explanatory diagram showing an operation of a first discriminating calculation unit in the circuit block shown in Fig. 12.
Fig. 15 is an explanatory diagram showing an operation of a second discriminating calculation unit in the circuit block shown in Fig. 12.
Fig. 16 is an explanatory diagram showing an operation of a third discriminating calculation unit in the circuit block shown in Fig. 12.
Fig. 17 is a perspective view showing a box of an apparatus for discriminating authenticity of card for card in accordance with a second embodiment of the present invention.
Fig. 18 is a plan view of optical system showing a measuring light projecting system and a reflected diffraction light detecting system both of which are set up in the box shown in Fig. 17.
Fig. 19 is a front view of optical system showing a measuring light projecting system and a reflected diffraction light detecting system both of which are set up in the box shown in Fig. 17.
Fig. 20 is an explanatory diagram showing a projected area of the measuring beam projected by the measuring light projecting system shown in Fig. 19.
Fig. 21 is an explanatory diagram showing a light intensity distribution of reflected diffraction light on a line sensor.

### Best Mode for Carrying Out the Invention

Hereinafter, embodiments of the present invention will be described with reference to the accompanying drawings.

### [Embodiment 1]

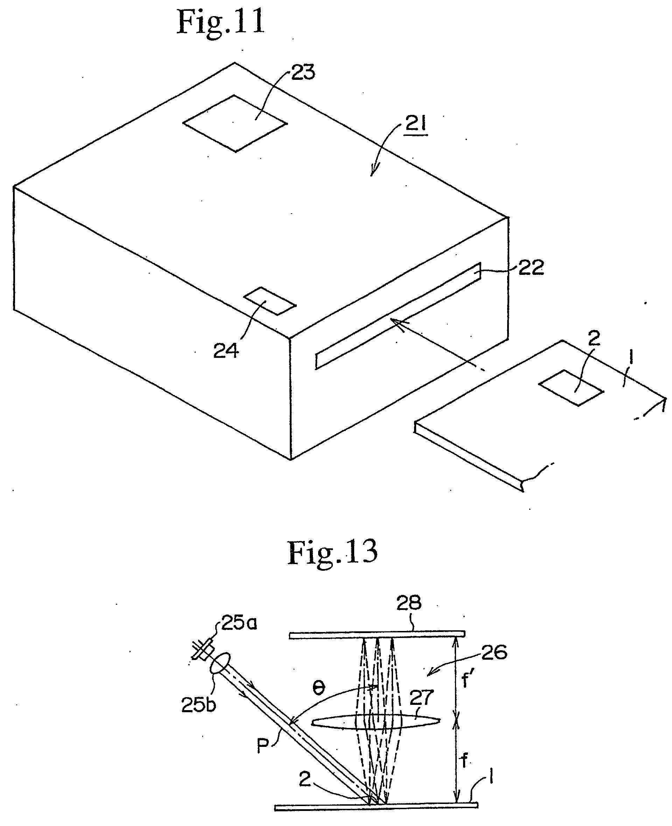

Fig. 11 is a perspective view to show a box of an apparatus for discriminating authenticity of a card in accordance with a first embodiment of the present invention.

In Fig. 11, reference numeral 21 designates a box in the apparatus for discriminating authenticity of card. The box 21 is provided with a loading slot 22 for card 1, a discriminated result display panel 23 and a switch 24, and inside of the box 21 there are provided a measuring light projecting system which projects a measuring beam onto the hologram seal 2, a reflected diffraction light detecting system which detects a reflected diffraction light reflected on the hologram seal 2, and a circuit portion which performs operation control of authenticity-discrimination for card and will be described later.

The measuring light projecting system is mainly composed of a semiconductor laser 25a and a collimating lens 25b, the collimating lens 25b transforms a divergent light which is projected from the semiconductor laser 25a into a parallel light beam and a measuring beam P composed of the parallel beam is projected onto the hologram seal 2 in a state that an incident angle ,, is maintained.

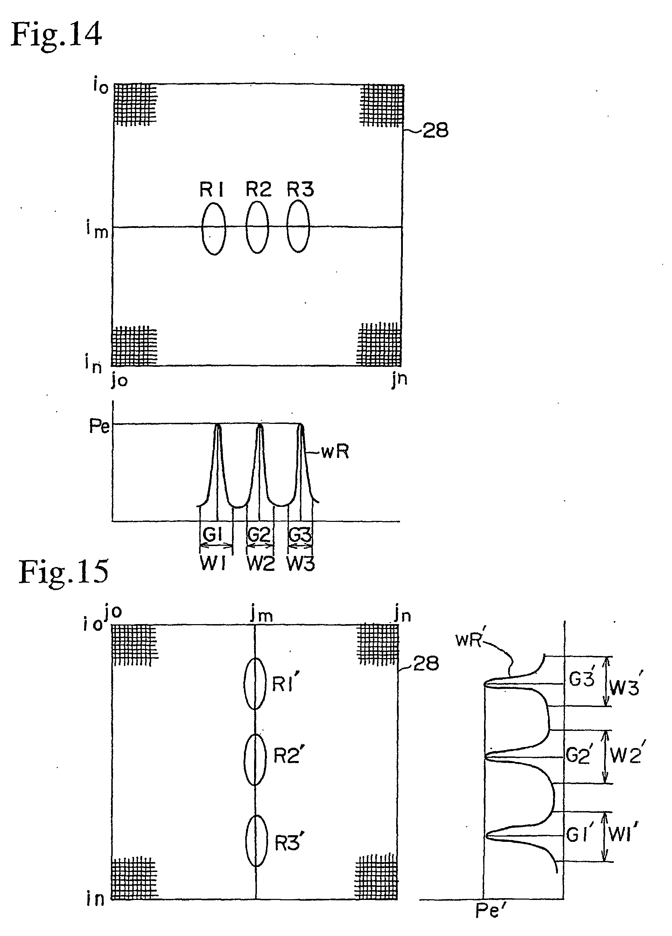

In Fig. 13, reference numeral 27 designates a Fourier transforming lens which composes one part of the reflected diffraction light detecting system, the hologram seal 2 is set at a front focusing position f of the Fourier transforming lens 27 and an area sensor 28 which composes the detecting system at the same time is set at a back focusing position f of the Fourier transforming lens.

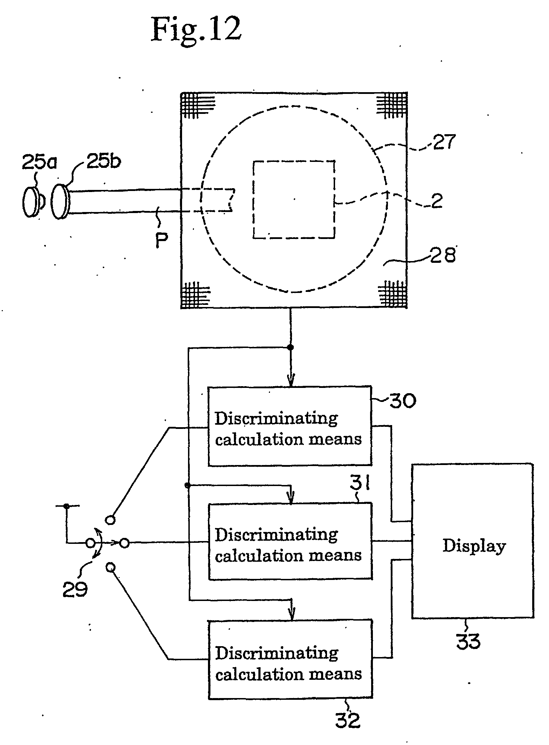

The circuit portion is composed of a switch circuit 29 which is operated by the switch 24, first to third discriminating calculation means 30 ∼ 32 and a display 33. The switch 29 is adapted to selectively switch the three discriminating calculation means 30 ∼ 32. For example when a kind of card is desired to discriminate the authenticity, the switch 24 is operated to operate the switching circuit 29 such that discriminating calculation means 30∼32 which correspond to the kind of card are operated. In Fig. 12, the discriminating calculation means 31 is selected.

The first discriminating calculation means 30 corresponds to the hologram seal 2 shown in Fig. 2. The discrimination is performed by a method in that respective reflected diffraction lights R1, R2 and R3 are detected by the area sensor 28 with its row element having address im as shown in Fig. 14 (it may be only one row element with i = 1), the respective received light output is generated by the reflected diffraction lights R1, R2 and R3, a distribution of light intensity ,,R is obtained, then a peak strength Pe, respective center of mass of the peaks G1 ∼ G3 and the respective width W1 ∼ W3 of the spread of ,,R are calculated by a statistical technique, thereby the authenticity of card is discriminated and output the result.

The second discriminating calculation means 31 corresponds to the hologram seal 2 shown in Fig. 5. The discrimination is performed by a method in that respective reflected diffraction lights R1', R2' and R3' is detected by the area sensor 28 with its column element having address jm as shown in Fig. 15 (it may be only one column element with j = 1), the respective received light output is generated by the reflected diffraction lights R1', R2' and R3', a distribution of light intensity ,,R' is obtained, then a peak strength Pe', respective center of mass of the peaks G1' ∼ G3' and the respective width of the spread of ,,R' are calculated by a statistical technique, thereby the authenticity of card is discriminated and output the result.

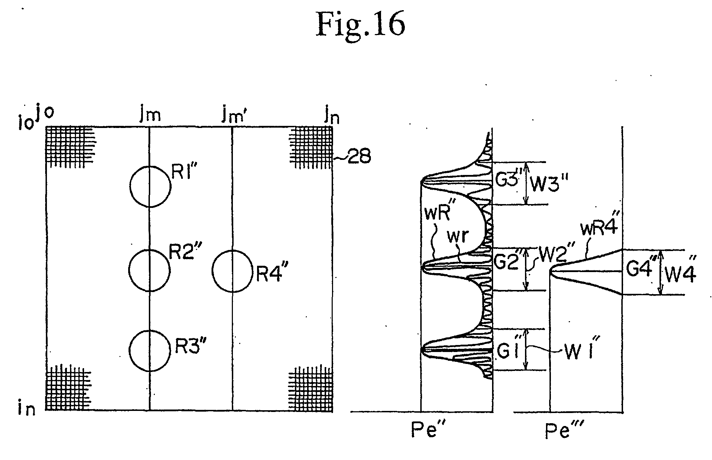

The third discriminating calculation means 32 corresponds to the hologram seal 2 shown in Fig. 8. The discrimination is performed by a method in that respective reflected diffraction lights R1", R2" and R3" are detected by the area sensor 28 with its column element having address jm as shown in Fig. 16 (it may be only one column element with j = 1), the respective received light output is generated by the reflected diffraction lights R1", R2" and R3", an envelope ,,R" (in other words a distribution of light intensity ,,R") of the reflected diffraction lights R1", R2", R3" are obtained, then a peak strength Pe", respective center of mass of the peaks G1 ∼ G3 and the respective width of the spread of ,,R" are calculated by a statistical technique, thereby the authenticity of card is discriminated. In Fig. 16, a wave form ,,r designates an output generated by the spot like diffraction light r, and the envelope ,,R" corresponds to a received light output of the reflected diffraction lights R1", R2" and R3" by the long period structure.

It may also recommendable that the mirror reflection light R4" is employed at the same time for authenticity discrimination by that reflected diffraction light R4" is detected by the area sensor 28 with its column element having address jm' as shown in Fig. 16, the received light output is generated by the reflected diffraction light R4", a distribution of light intensity ,,R4" is obtained, then a peak strength Pe"', respective center of mass of the peaks G4" and the width of the spread W4" of ,,R4" are calculated. The discriminating calculation means 32 in this case also outputs the result after discrimination has been performed.

The display 33 is adapted to display the result of discrimination of the discriminating calculation means 30 ∼ 32 on the display panel 23.

Because the apparatus for discriminating authenticity of card according to this embodiment is structured with the configuration described above in which three kind of discriminating calculation means 30 ∼ 32 are set to discriminate the authenticity of card based on several kind of holograms and these discriminating calculation means 30 ∼ 32 are selectively switched in compliance with the kind of a card, only one apparatus can be used to perform the discrimination of authenticity for several kind of cards.

### [Embodiment 2]

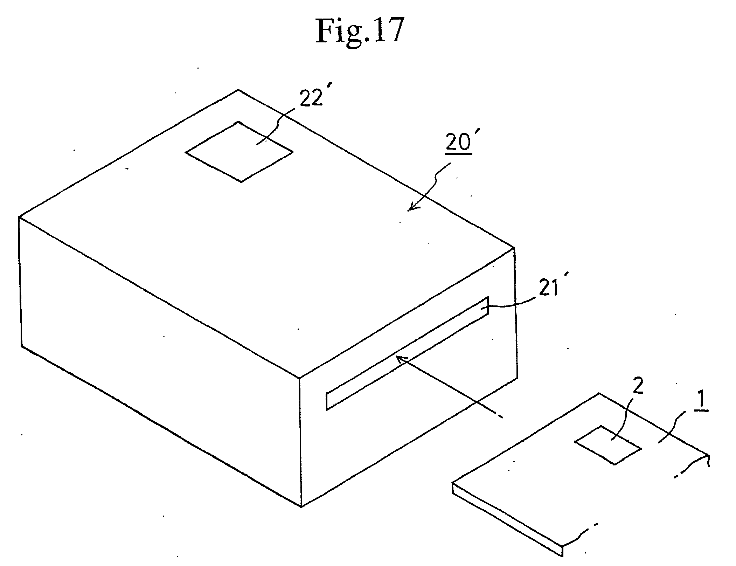

Fig. 17 is a perspective view to show a box of an apparatus for discriminating authenticity of card for card in accordance with a second embodiment of the present invention, a reference symbol 20' designates a box set in the apparatus for discriminating authenticity of card for card. In the box 20' a loading slot 21' for card 1 is made and a display panel 22' which shows an authenticity of the card 1 is set on an upper portion of the box. At this point it is supposed that a set of grid patterns 17 ∼ 19 and pattern 20 are arranged on the card 1 as shown in Fig. 8.

It is arranged that the card 1 is dragged into the box 20' by a card carrying means which is not shown in the drawing, and after an authenticity discrimination has been performed the card 1 is automatically discharged.

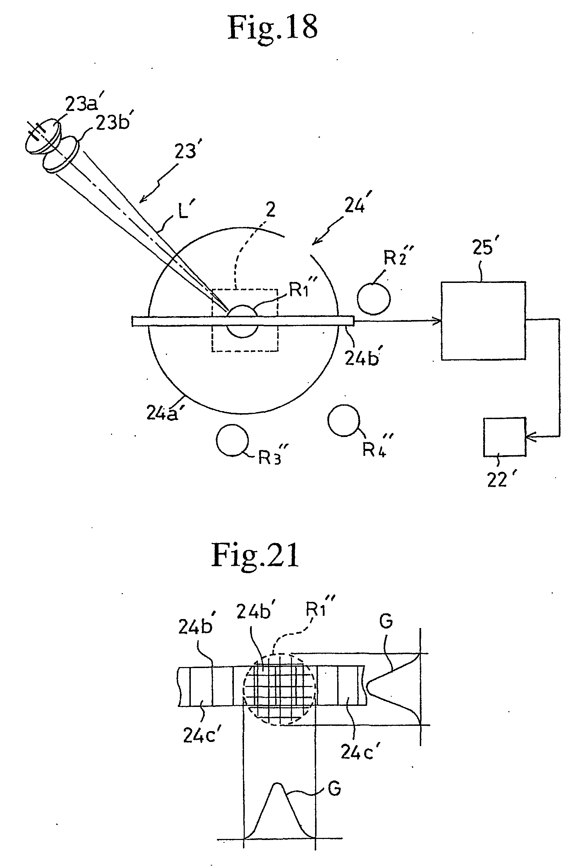

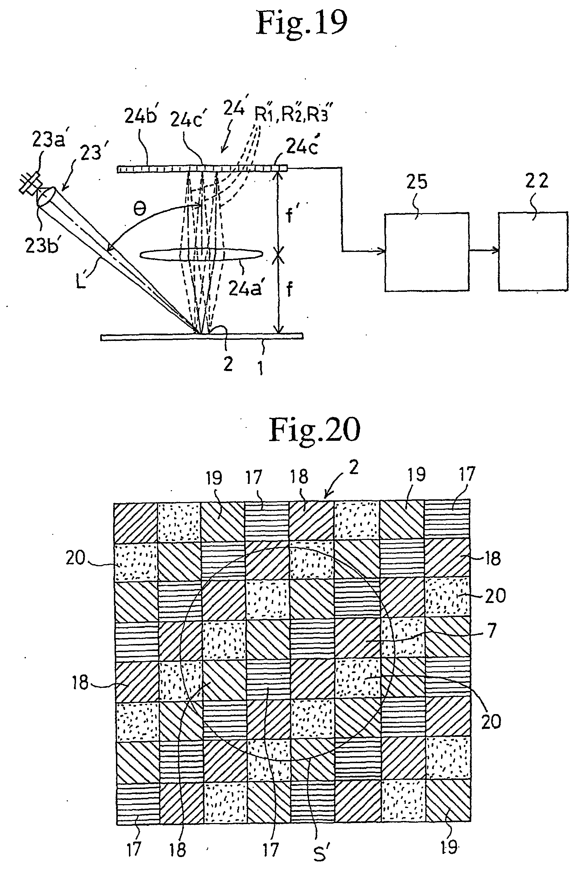

In the box 20', a measuring light projecting system 23' and a reflected diffraction light detecting system 24' which are shown in Fig. 18 and Fig. 19 are set.

The measuring light projecting system 23' is composed of a semiconductor laser 23a' and a convergence lens 23b'. The convergence lens 23b' has a function to transform a laser beam which is projected from the semiconductor laser 23a' into a measuring beam L' as a convergence light beam and to flood a measuring beam L' onto the card 1.

The reflected diffraction light detecting system 24' is composed with a Fourier transforming lens 24a' and a line sensor 24b' as a light receiving element. The card 1 is dragged into the box 20' and set at a front side focusing position f of the Fourier transforming lens 24a'. The line sensor 24b' is set at a back side focusing position f' (f = f') of the Fourier transforming lens 24a'.

When the semiconductor laser 23a' is turned on by a manipulation of switch which is not shown in the drawing, a measuring beam L' is projected in a manner that an incident angle ,, with reference to the hologram seal 2 is maintained as shown in Fig. 18 and Fig. 19. In a predetermined area of the hologram seal 2 a projecting spot S' is formed as shown in Fig. 20 with enlargement. Consequently, the reflected diffraction lights R1", R2" and R3" by the projecting spot S' are generated as shown in Fig. 18.

It is desirable that a projected area of the projecting spot S' on the hologram seal 2 is wider than a area which is defined by a grid pattern 19 which has the longest period and it is narrower than two or three times more of the area defined by the grid pattern with the longest period.

By this arrangement that the projecting area by the projecting spot S' is less than two or three times more of the area defined by the grid pattern 19 with the longest period, it can be prevented that micro diffraction phenomenon is secondarily generated by a period of the grid pattern in the spot of the respective reflected diffraction lights R1" ∼ R3" on the line sensor 24b' generated by the grid patterns, the reflected diffraction light R1" can be made much closer resemblance to a reflected diffraction light with the distribution of light intensity based on a Gaussian distribution G as shown in Fig. 21.

At this point the measuring beam projected on the hologram seal 2 is projected in a form not a parallel light beam but a convergence light beam with a predetermined spread angle. By this arrangement even when it is separated into a few pieces of projecting spot in relation to the projected area, the individual projecting spot of light is formed as a spread image in comparison with a case when a parallel light beam is projected. Accordingly these spread images are partially overlaid each other then as a whole the reflected diffraction light is made a light beam resembles to a light beam having the Gaussian distribution.

A light receiving signal output from respective light receiving elements 24c' of the line sensor 24b', is input for the discriminating means 25' to perform the authenticity discriminating for the card 1 by a comparison of the output with a predetermined reference value, for example, the peak strength of light intensity distribution, the width of its spread, position of center of mass and so on, and a result of the discrimination is displayed on the display panel 22'.

### Possibility of Utilization in Industry

In accordance with the inventions as recited in claims 1 to 3, only one apparatus for discriminating authenticity of a card can be applicable to a plurality of holograms.

In accordance with the inventions as recited in claims 4 to 7 an apparatus for discriminating authenticity of a card is capable of objectively discriminating the authenticity even for a card having a hologram seal in which gird patterns having the short periodic structure and the long periodic structure are periodically arranged.

## Claims

1. An apparatus for discriminating authenticity of a card on which a predetermined hologram seal corresponding to a kind of the card is provided, based on the hologram seal comprising:
a measuring light projecting system to project a measuring beam onto said hologram seal;
an area sensor to receive reflected diffraction light generated by said measuring beam which is reflected on said hologram seal;
a plurality of discriminating calculation means to discriminate the authenticity of said card by respectively performing a calculation in accordance with a kind of said hologram seal based on a signal output from said area sensor; and
a selecting means to select any one of said plurality of discriminating calculation means.

2. An apparatus for discriminating authenticity of a card according to claim 1, **characterized by** that a plurality kind of grid patterns having diffraction gratings whose arrangement-forming directions are different to each other are arranged in a predetermined period on said hologram seal in order that said reflected diffraction lights are composed with diffraction lights like a great number of small scattered spots generated by the diffraction gratings, and at the same time a mirror reflection pattern is arranged in a predetermined period, and **characterized by** that at least one of said discriminating calculation means discriminating the authenticity of the card having the hologram seal in which a mirror reflection pattern and grid patterns with said short periodic structure and a long periodic structure are formed.

3. An apparatus for discriminating authenticity of a card according to claim 2, **characterized in that** said discriminating calculation means performs the discrimination of authenticity of said card with respect to the mirror reflection light generated by said mirror reflection pattern.

4. An apparatus for discriminating authenticity of a card, **characterized by** including:
a measuring light projecting system which converges and projects a measuring beam from a predetermined direction onto a hologram seal formed on the card in which a plurality kind of grid patterns having diffraction gratings whose arrangement forming directions are different mutually are arranged in a predetermined period;
a light receiving element to receive reflected diffraction light generated by said measuring beam which is reflected and diffracted by said hologram seal; and
a discriminating calculation means to perform the discrimination of authenticity of said card based on a received light signal of said light receiving element.

5. An apparatus for discriminating authenticity of a card which has a hologram seal with a plurality of grid patterns having diffraction gratings whose arrangement forming directions are different mutually are arranged in a predetermined period on said hologram seal in order that said reflected diffraction lights are composed with diffraction lights like a many number of small scattered spots generated by the diffraction gratings, and at the same time a mirror reflection pattern is arranged in a predetermined period, **characterized by** including:
a measuring light projecting system which converges and projects a measuring beam from a predetermined direction onto said hologram seal;
a light receiving element to receive reflected diffraction light of said measuring beam which is reflected and diffracted by said hologram seal; and
a discriminating calculation means to perform the discrimination of authenticity of said card based on a received light signal of said light receiving element.

6. An apparatus for discriminating authenticity of card according to claim 4 or claim 5, **characterized in that** total occupying area of said grid pattern existing in a projected area of the measuring beam is larger than an area defined by a grid pattern with a longest periodic and smaller than two or three times more of the defined area.

7. An apparatus for discriminating authenticity of card for card as claimed in claim 5, **characterized in that** a mirror reflection pattern is formed with a predetermined period on said hologram seal.
